# EUROPEAN PATENT SPECIFICATION

(11) **EP 3 166 263 B1**
(45) Date of publication and mention of the grant of the patent: **07.10.2020**
(21) Application number: 14888640.1
(22) Date of filing: 23.10.2014
(51) Int. Cl.: H04L 12/717, H04L 12/721, H04L 12/751

(54) **ROUTING CALCULATION METHOD AND DEVICE FOR TRILL ISIS**
LEITWEGLENKUNGSBERECHNUNGSVERFAHREN UND -VORRICHTUNG FÜR TRILL ISIS
PROCÉDÉ DE CALCUL DE ROUTAGE, ET DISPOSITIF IS-IS TRILL

(30) Priority: 01.07.2014 CN 201410310138
(43) Date of publication of application: 10.05.2017
(73) Proprietor: ZTE Corporation, Shenzhen, Guangdong 518057 (CN)
(72) Inventor: WU, Qiang, Shenzhen Guangdong 518057 (CN)
(74) Representative: Brunazzi, Stefano
(86) International application number: PCT/CN2014/089236
(87) International publication number: WO 2015/154427

(56) References cited:
- WO-A1-2014/094557
- CN-A- 102 685 011
- CN-A- 102 694 729
- CN-A- 103 391 250
- CN-A- 104 270 315
- US-A1- 2012 170 489
- US-A1- 2014 071 987
- US-A1- 2014 169 173
- "VLAN registration in Shortest Path Bridging zhaisupingetauawei.com ; aq-suping-VLANReginSPB-0506-01", IEEE DRAFT; AQ-SUPING-VLANREGINSPB-0506-01, IEEE-SA, PISCATAWAY, NJ USA, vol. 802.1, 15 May 2006 (2006-05-15), pages 1-8, XP017640901, [retrieved on 2006-05-15]
- ERIC GRAY ET AL: "The Architecture of an RBridge Solution to TRILL; draft-ietf-trill-rbridge-arch-05.txt", THE ARCHITECTURE OF AN RBRIDGE SOLUTION TO TRILL; DRAFT-IETF-TRILL-RBRIDGE-ARCH-05.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. trill, no. 5, 25 February 2008 (2008-02-25), XP015054018,
- Cisco Networks ET AL: "Introduction to TRILL", The Internet Protocol Journal, 1 September 2011 (2011-09-01), pages 1-32, XP055206907, Chief Technology Office, Cisco Systems, Inc., 170 West Tasman Drive, San Jose, CA 95134-1706, USA Retrieved from the Internet: URL:http://www.cisco.com/web/about/ac123/a c147/archived_issues/ipj_14-3/ipj_14-3.pdf [retrieved on 2015-08-07]

## Description

### Technical Field

The present disclosure relates to the field of communications, and in particular to a Transparent Interconnection of Lots of Links (TRILL) Intermediate System to Intermediate System (ISIS)-based route calculation method and device.

### Background

TRILL ISIS is a dynamic Interior Gateway Protocol (IGP) based on a link state. According to the ISIS protocol, after two Routing Bridges (RBs) interact with each other through hello packets to perform negotiation and neighbour relationship establishment, each RB generates a Link State Protocol Data Unit (LSP) for describing link state information of the present RB, and sends the LSP to the network; besides, the RB also stores the LSP sent from all RB devices in the network topology to form a Link State Database (LSDB). In the ISIS, the best route to a destination address is calculated based on the LSDB according to a Shortest Path First (SPF) algorithm.

It can be seen from the above that, each RB in the network needs to perform functions like flooding, synchronization, saving and route calculation of the LSP, which wastes considerable calculation resources and occupies network bandwidth. Besides, such a mode makes possible some abnormal route calculation and network attacks like LSP interception and modification caused by the LSP flooding, which may make the network paralyzed or may enable the sending of traffics to a specific destination of a hacker.

Aiming at the problem that a TRILL ISIS-based route calculation manner adopted in related technologies occupies considerable calculation resources and can be easily attacked, an effective solution has not been proposed.

The International Patent Application WO 2014/094557 A1 describes solutions for calculating a route using an IS-IS protocol and LSP packets.

The IEEE draft *"VLAN registration in shortest path bridging zhaisupingetauawai.com"*, aq-suping-VLANReginSPB-0506-01, discloses SPT calculating protocols for, *inter alia*, IS-IS protocols.

The IETF draft *"The architecture of an RBridge solution to TRILL",* draft-ietf-trill-rbridge-arch-05.txt, by E. Gray et al., provides an architecture for TRILL based on RBridges, i.e., link-layer (L2) devices that use a routing protocol as a control plane.

### Summary

The present invention is defined by independent claims 1, 6 to which reference should now be made. Further enhancements are characterized by the dependent claims.

The examples of the present disclosure provide a TRILL ISIS-based route calculation method and device, for at least solving the problem that a TRILL ISIS-based route calculation manner adopted in related technologies occupies considerable calculation resources and can be easily attacked.

According to an example of the present disclosure, a TRILL ISIS-based route calculation method is provided, which includes that: a route calculation unit acquires an LSP packet from each RB in a network; and the route calculation unit calculates a routing table of each RB according to the LSP packet acquired from each RB, and sends the routing table to each RB for which the routing table is calculated; the LSP packet includes: a neighbour TLV22 of the RB from which the LSP packet is acquired, wherein the neighbour TLV22 of the RB contains one or more neighbour items, each neighbour item containing next-hop information needed by a current neighbour, wherein the route calculation unit is located on a part of RBs in all RBs of the network; or, the route calculation unit is located in a preset route calculation device.

The route calculation unit acquiring the LSP packet from each RB in the network includes that: the route calculation unit acquires the LSP packet from each RB, wherein the LSP packet includes the neighbour TLV 22 of the RB, wherein the neighbour TLV 22 of the RB contains one or more neighbour items, each neighbour item containing a Media Access Control (MAC) interface address sub-TLV of a current neighbour.

The MAC interface address sub-TLV includes type and length of the MAC interface address sub-TLV, and a MAC address of a local interface corresponding to the neighbour.

In a situation where the neighbour item corresponds to a point-to-point neighbour, the LSP packet further includes a neighbour MAC address sub-TLV of the point-to-point neighbour.

The neighbour MAC address sub-TLV includes type and length of the neighbour MAC address sub-TLV, and a MAC address of a neighbour interface on a link corresponding to the neighbour.

According to another example of the present disclosure, a TRILL ISIS-based route calculation device is provided, which is in a route calculation unit and includes: an acquiring component, which is configured to acquire the LSP packet from each RB in the network; and a calculating component, which is configured to calculate a routing table of each RB according to the LSP packet acquired from each RB, and send the routing table to each RB for which the routing table is calculated; the LSP packet includes: a neighbour TLV 22 of the RB from which the LSP packet is acquired, wherein the neighbour TLV22 of the RB contains one or more neighbour items, each neighbour item containing next-hop information needed by a current neighbour, wherein the route calculation unit is located on a part of RBs in all RBs of the network; or, the route calculation unit is located in a preset route calculation device.

The acquiring component is configured to acquire the LSP packet from each RB, wherein the LSP packet includes the neighbour TLV 22 of the RB, wherein the neighbour TLV 22 of the RB contains one or more neighbour items, each neighbour item containing a MAC interface address sub-TLV of a current neighbour.

In the situation where the neighbour item corresponds to a point-to-point neighbour, the LSP packet further includes a neighbour MAC address sub-TLV of the point-to-point neighbour.

According to the method, the route calculation unit acquires the LSP packet from each RB in the network, and the route calculation unit calculates a routing table of each RB according to the LSP packet acquired from each RB, and sends the routing table to the corresponding RB. The solution provided by the examples of the present disclosure solves the problem that a TRILL ISIS-based route calculation manner adopted in related technologies occupies considerable calculation resources and can be easily attacked. The solution can reduce the calculation resources occupied by the TRILL ISIS-based route calculation manner, and reduce the opportunities of attacking the TRILL ISIS since it is unnecessary in the present scheme to conduct mutual flooding and synchronization among various RB and save the LSP of other RB, thereby improving the stability and reliability of a system.

### Brief Description of the Drawings

The accompanying drawings described here are used for providing a deeper understanding of the present disclosure, and constitute a part of this application; schematic examples of the present disclosure and description thereof are used for illustrating the present disclosure and not intended to form an improper limit to the present disclosure. In the accompanying drawings:
Fig. 1 is a flowchart of a TRILL ISIS-based route calculation method according to an example of the present disclosure;
Fig. 2 is a structural diagram of a TRILL ISIS-based route calculation device according to an example of the present disclosure;
Fig. 3 is a diagram of a scenario where a route calculation unit is located on an RB according to an example 1 of the present disclosure;
Fig. 4 is a diagram of a scenario where a route calculation unit is located on a special-purpose computer according to the example 1 of the present disclosure;
Fig. 5 is a diagram of the generated LSP for a broadcast link according to the example 1 of the present disclosure; and
Fig. 6 is a diagram of the generated LSP for a point-to-point link according to the example 1 of the present disclosure.

### Detailed Description of the Embodiments

The present disclosure is elaborated below with reference to the accompanying drawings and examples. Note that, examples and features in examples in the disclosure can be combined with each other if there is no conflict.

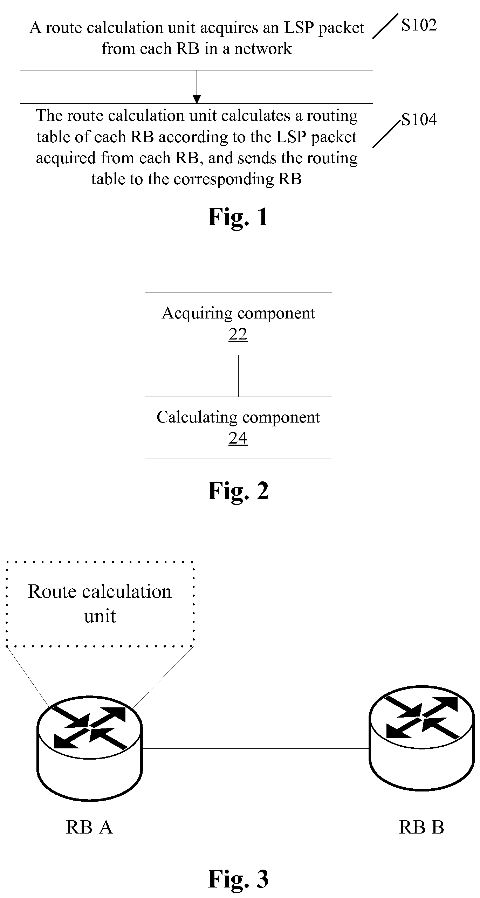

According to an example of the present disclosure, a TRILL ISIS-based route calculation method is provided. Fig. 1 is a flowchart of a TRILL ISIS-based route calculation method according to an example. As shown in Fig. 1, the method includes the following steps:
S102: a route calculation unit acquires an LSP packet from each RB in a network; and
S104: the route calculation unit calculates a routing table of each RB according to the LSP packet acquired from each RB, and sends the routing table to the corresponding RB.

Through the above steps, the route calculation unit is added in the network, and the calculation of the routing tables in respective RBs in the related technologies is transferred to the route calculation unit which performs the calculation collectively. According to the method provided by the present example, the route calculation unit acquires the LSP packet from each RB in the network, and then calculates a routing table of each RB according to the LSP packet acquired from each RB and sends the routing table to the corresponding RB. By virtue of the method, the resources for route calculation in the RB are released, and the route calculation is conducted by the route calculation unit in a unified way. In this way, the problem that a TRILL ISIS-based route calculation manner adopted in related technologies occupies considerable calculation resources and can be easily attacked is solved, the calculation resources occupied by the TRILL ISIS-based route calculation manner are reduced, and the opportunities of attacking the TRILL ISIS are reduced since it is unnecessary in the present scheme to conduct mutual flooding and synchronization among various RB and save the LSP of other RB, thereby improving the stability and reliability of a system.

In related technologies, each RB calculates its own routing table, so the RB can conveniently learn the next-hop information needed by a neighbour. When the routing table of each RB is calculated by the route calculation unit, the next-hop information can be acquired from each RB. In the present example, the next-hop information needed by the neighbour can be contained in each neighbour item of a neighbour TLV22 which is contained in the LSP packet sent from each RB to the route calculation unit.

The next-hop information needed by the neighbour may be carried in the LSP packet in a following manner: a MAC interface address sub-TLV of a current neighbour is contained in each neighbour item of the neighbour TLV22 of the RB.

The MAC interface address sub-TLV is a newly added sub-TLV type in the present example. The MAC interface address sub-TLV may include a MAC address of a local interface corresponding to the neighbour, and type and length of the MAC interface address sub-TLV. In the present example, the sub-TLV type of the MAC interface address sub-TLV may be set as 16.

In a situation where the neighbour item corresponds to a point-to-point neighbour, the LSP packet may further include a neighbour MAC address sub-TLV of the point-to-point neighbour.

The neighbour MAC address sub-TLV is a newly added sub-TLV type in the present example. The neighbour MAC address sub-TLV may include a MAC address of a neighbour interface on a link corresponding to the neighbour, and type and length of the neighbour MAC address sub-TLV. In the present example, the sub-TLV type of the neighbour MAC interface address sub-TLV may be set as 17.

Corresponding to the above method, in the present example, a TRILL ISIS-based route calculation device is also provided, which is located in the route calculation unit and is configured to implement the above example and exemplary implementation, and these which have been illustrated will not be repeated. For example, the term "component" can implement a combination of software and/or hardware with expected functions. Although the device described in the following example is implemented by software preferably, the implementation through hardware, or the combination of software and hardware is possible and conceived.

Fig. 2 is a structural diagram of a TRILL ISIS-based route calculation device according to an example of the present disclosure. As shown in Fig. 2, the device includes: an acquiring component 22 and a calculating component 24; the device is illustrated below.

The acquiring component 22 is configured to acquire the LSP packet from each RB in the network; the calculating component 24 is coupled with the acquiring component 22 and is configured to calculate a routing table of each RB according to the LSP packet acquired from each RB, and send the routing table to the corresponding RB.

The LSP packet includes: a neighbour TLV22 of the RB, wherein the neighbour TLV22 of the RB contains one or more neighbour items, each neighbour item containing next-hop information needed by a current neighbour.

The acquiring component 22 may be configured to acquire the LSP packet from each RB, wherein the LSP packet includes the neighbour TLV 22 of the RB, wherein the neighbour TLV 22 of the RB contains one or more neighbour items, each neighbour item containing a Media Access Control (MAC) interface address sub-TLV of a current neighbour.

In the situation where the neighbour item corresponds to a point-to-point neighbour, the LSP packet may further include a neighbour MAC address sub-TLV of the point-to-point neighbour.

The route calculation unit may be on a part of RBs in all RBs of the network; or, the route calculation unit may be located in a preset route calculation device, for example, it is possible to set one or more special-purpose computers as the route calculation unit.

An illustration is given below in combination with the examples, and the following exemplary examples may combine the above example and its exemplary implementation.

The TRILL-ISIS protocol in the following examples supports a distributed route calculation which is completed by the route calculation unit alone. The route calculation unit may be located on a local device, or other devices in the network, or one or more special-purpose computers for the route calculation. The route calculation unit acquires LSP database information from the RB in the network, and conducts a TRILL-ISIS-based topology calculation and Partial Route calculation (PRC) for each RB. The RB in the network no longer needs to conduct flooding and synchronization of the LSP, no longer saves and processes the LSP of other RBs, and no longer conducts the topology calculation and the PRC, but only needs to acquire its own routing table, which can be used to forward a data packet, from the route calculation unit. In this way, the RB has no need of conducting synchronization of the LSP database, which greatly releases network load caused by the database synchronization and reduces occupied user bandwidth. The RB has no need of conducting flooding and synchronization of the LSP database, has no need of saving and processing the LSP of other RBs, and has no need of conducting the topology calculation and the PRC, which greatly releases the workloads and resources of the RB. The RB only needs to handle the forwarding of data packets, so the forwarding performance of the RB can be greatly improved. At the same time, there is no need to conduct the database synchronization for the data packet of the LSP in the network, so hidden troubles concerning networks security like packet interception and modification are prevented.

The TRILL-ISIS protocol supports the distributed route calculation. The RB no longer needs to conduct flooding and synchronization of the LSP, and the route calculation. The RB only sends the LSP generated by itself to the route calculation unit instead of saving and processing the LSP generated by other RBs. The route calculation unit may be a device specialized in the route calculation, which can be located on an RB or a special-purpose routing computer. The route calculation unit acquires the LSP database information from each RB in the network, conducts TRILL-ISIS-based topology calculation and route calculation for each RB, and sends the routing table to the corresponding RB.

In the present example, a neighbour information description format (RFC5305) of the neighbour TLV22 specified in the existing protocol is kept under a wide metric, but two new sub-TLVs of the neighbour TLV22 are added, wherein the two new sub-TLVs of the neighbour TLV22 are respectively: a MAC interface address sub-TLV, whose type is set as 16; and a neighbour MAC address sub-TLV, whose type is set as 17. The format is described in detail as below.

The RB fills out neighbour description information of the neighbour TLV22 as described in the following examples. The neighbour description information of each neighbour can carry the following contents: a MAC interface address sub-TLV and a neighbour MAC address sub-TLV.

The route calculation unit uses the neighbour TLV and its sub-TLVs to conduct the topology calculations (unicast topology calculation and multicast distribution tree calculation) and the PRC (unicast route calculation and multicast route calculation) based on the manners described in the examples of the present disclosure.

In the topology calculation, the next-hop information can be acquired from the sub-TLV of the neighbour description information of the neighbour TLV22. For example, outgoing interface information of the next hop can be acquired from the MAC interface address sub-TLV, and gateway information of the next hop can be acquired from the MAC interface address sub-TLV or the neighbour MAC address sub-TLV.

Network devices running the TRILL-ISIS protocol and network devices conducting the route calculation alone in the following examples support TRILL-ISIS-based distributed route calculation. Various devices supporting the TRILL-ISIS and various devices providing the route calculation for the TRILL-ISIS, including a switch, a host computer and so on, are applicable to the solution provided by the examples of the present disclosure. By virtue of the distributed route calculation independent from a route calculation function based on the TRILL-ISIS, a route calculation unit (device) can be dedicated to implementing the route calculation function for each RB.

The RB in the network fills out neighbour information according to the method of filling out the neighbour TLV22 in the LSP which is provided in the examples of the present disclosure. There are two new sub-TLVs presented in this example: one is a MAC interface address sub-TLV, whose type is set as 16; and the other is a neighbour MAC address sub-TLV, whose type is set as 17. At last, the generated LSP is sent to the route calculation unit.

The route calculation unit receives the LSP sent from all the RBs, and conducts the route calculation for each RB, including: the topology calculations (the unicast topology calculation and the multicast distribution tree calculation), and the PRC (the unicast PRC and the multicast PRC). The topology calculation is still conducted based on the SPF algorithm. The next-hop information is acquired from the sub-TLV of the TLV22, and the next-hop information from the current RB to other RBs is calculated. Then, the PRC is conducted, that is, the next-hop information to the other RB is copied to the next-hop information of reachability information carried to complete the route calculation. At last, the routing table corresponding to each RB is sent to the corresponding RB, then, this RB can use the routing table to forward the data packet.

In the examples, the method in which the TRILL-ISIS protocol supports the distributed route calculation has the following advantages:
(1) Reducing the network load: this method has no need of conducting flooding and synchronization of the LSP in the network, so the network load is reduced.
(2) Releasing the workloads and resources of the RB: the RB has no need of conducting flooding and synchronization of the LSP, has no need of saving and processing the LSP of other RB, and has no need of conducting the route calculation, so the workloads and resources of the RB are greatly released.
(3) Improving the forwarding performance of the RB: the RB has no need of conducting flooding and synchronization of the LSP, has no need of conducting the route calculation, and needs only to concentrate on the forwarding of data packet, so the forwarding performance of a router (switch) can be greatly improved; and
(4) Guaranteeing the network security: the LSP has no need of conducting flooding and synchronization in the network, so network attacks like LSP interception and modification are eliminated.

The examples are further illustrated in combination with the specific implementations.

### Example 1

In the example, the route calculation unit is a device specialized in the route calculation, which can be on an RB or a special-purpose routing computer. After a link state of the RB changes, the RB generates the LSP packet, and then the RB sends the generated LSP packet to an independent calculation unit. The route calculation unit saves the LSP of all the RBs in the network. The route calculation unit conducts the route calculation based on these LSP, and sends a route calculation result to the corresponding router; then, the router can forward the data packet according to these routing information.

### 1. Running scenarios

This portion describes in detail running manners in two scenarios, one running scenario is that the route calculation unit is located on the RB and the other running scenario is that the route calculation unit is located on the special-purpose routing computer. Certainly, a distributed route calculation method described in the examples of the present disclosure is not limited to these two scenarios, and its core idea is separating the route calculation from the RB to be completed by the route calculation unit.

### (1) The running scenario where the route calculation unit is located on the RB

Fig. 3 is a diagram of a scenario where the route calculation unit is located on the RB according to an example 1 of the present disclosure. As shown in Fig. 3, in the network consisting of an RB A and an RB B, the route calculation unit is located on the RB A, namely the RB A contains the route calculation unit. After generating the LSP, the RB A sends all the LSP generated by itself to the route calculation unit, which is located on the RB A itself. The RB B also sends the LSP generated by itself to the route calculation unit of the RB A via a special channel, flooding or other ways. Then, the route calculation unit on the RB A conducts the route calculation for each RB according to the LSP generated by all the RB (the RB A and the RB B) in the network. Then, the calculation result, i.e., the routing tables are sent to the corresponding RBs, specifically, the routing table calculated for the RB A is sent to the RB A, and the routing table calculated for the RB B is sent to the RB B. At last, both the RB A and the RB B have their own corresponding routing tables, and they can forward the data packet according to the routing tables.

### (2) The running scenario where the route calculation unit is located on the special-purpose computer

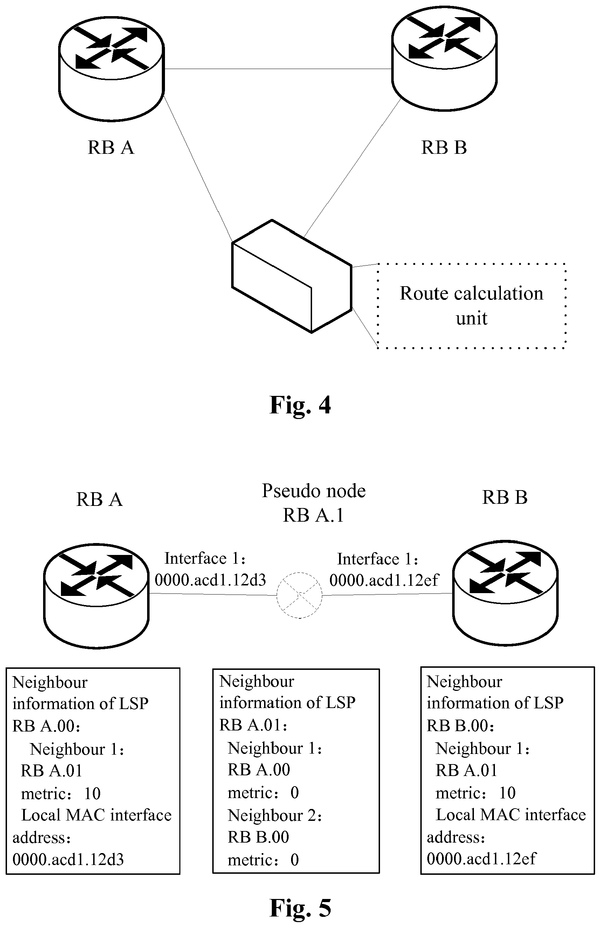

Fig. 4 is a diagram of a scenario where the route calculation unit is located on the special-purpose computer according to the example 1 of the present disclosure. As shown in Fig. 4, in the network consisting of the RB A and the RB B, the route calculation unit is located on a special-purpose computer for route calculation. After generating the LSP, the RB A sends all the LSP generated by itself to the route calculation unit on the computer via a special channel or other ways. The RB B also sends the LSP generated by itself to the route calculation unit on the computer via a special channel or other ways. Then, the route calculation unit on the special-purpose host conducts the route calculation for each RB according to the LSP generated by all the RB (the RB A and the RB B) in the network. Then, the calculation result, i.e., the routing tables are sent to the corresponding RBs, specifically, the routing table calculated for the RB A is sent to the RB A, and the routing table calculated for the RB B is sent to the RB B. At last, both the RB A and the RB B have their own corresponding routing tables, and they can forward the data packet according to the routing tables.

### 2. Route calculation method

The route calculation unit conducts the route calculation according to the LSP acquired from all the RB in the network. The route calculation unit needs to conduct the topology calculations and the PRC. The topology calculations are divided into the unicast topology calculation and the multicast distribution tree calculation. The PRCs are divided into the unicast PRC and the multicast PRC. The topology calculation and the PRC are still conducted according to the original method, that is, the topology calculation first uses the SPF algorithm to calculate the next-hop information from a current RB to each RB, wherein the next-hop information mainly includes: the outgoing interface information of the next hop and the gateway information of the next hop; the PRC copies, according to each RB through which the routing passes, the next-hop information reaching this RB to form the next-hop information of a current RB.

In the related technologies, each RB conducts the topology calculation and the PRC by itself to calculate the routing table needed by itself. In the topology calculation, the topology calculation is conducted according to the neighbour TLV in the LSP, in addition, the next-hop information in the topology calculation is acquired from each corresponding neighbour on the interface activated by the RB. However, according to the solution provided by the present example, the route calculation is conducted by the route calculation unit, rather than the RB. Thus, the next-hop information needed by the neighbour can be carried in the LSP, so that the route calculation unit can conduct the calculation of the next hop.

The extension to the ISIS protocol and the whole process of the route calculation are described below in detail. In the ISIS protocol, there are two link types: a broadcast link and a point-to-point link.

### 1. Protocol extension

### (1) Original protocol packet format

As shown in Table 1, on the condition of wide metric, the RFC5305 specifies that a neighbour information format in the neighbour TLV22 of the LSP includes: a system Id and a pseudo node number which occupy 7 bytes in total, metric information of 3 bytes, a sub-TLV length of 1 byte, and sub-TLV of 0-244 bytes.

**Table 1: the neighbour information format in the neighbour TLV22 according to the example 1 of the present disclosure**

| |
|---|
| Neighbour system-id (6 bytes) and a pseudo node number (1 byte) |
| Metric (3 bytes) |
| Sub-TLV length (1 byte) |

### (2) Modification to the protocol packet format

The present example modifies and extends, on the condition of wide metric, the neighbour information format and the sub-TLV of the neighbour TLV22 of the LSP as follows:
1) Neighbour TLV information still follows the original format (as shown in Table 1): the system Id and the pseudo node number which occupy 7 bytes in total, the metric information of 3 bytes, the sub-TLV length of 1 byte, and the sub-TLV of 0-244 bytes.
2) A new sub-TLV is proposed, namely a MAC interface address sub-TLV. As shown in Table 2, the format of the MAC interface address sub-TLV is as follows: the type of the sub-TLV is set as 16, and a local MAC interface address of 6 bytes is included in the MAC interface address sub-TLV. The new sub-TLV is used for acquiring the outgoing information in the next-hop information or a next-hop MAC address. A local MAC interface address of the interface where the neighbour is located is filled into the interface information sub-TLV.

**Table 2: the format of the local MAC interface address sub-TLV according to the example 1 of the present disclosure**

| |
|---|
| Sub-TLV type (1 byte) 16 |
| Length (1 byte) |
| Local MAC address (6 bytes) |

3) A new sub-TLV is proposed, namely a neighbour MAC address sub-TLV. As shown in Table 3, the format the neighbour MAC address sub-TLV is as follows: the type of the sub-TLV is set as 17, and a neighbour MAC interface address of 6 bytes is included in the neighbour MAC address sub-TLV. The new sub-TLV is used for acquiring the next-hop MAC address. A neighbour MAC interface address of the neighbour is filled into the interface information sub-TLV.

**Table 3: the format of the neighbour MAC interface address sub-TLV according to the example 1 of the present disclosure**

| |
|---|
| Sub-TLV type (1 byte) 17 |
| Length (1 byte) |
| Neighbour MAC address (6 bytes) |

### 2. Broadcast link related protocol extension and route calculation

Fig. 5 is a diagram of the generated LSP for a broadcast link according to the example 1 of the present disclosure. As shown in Fig. 5, on the broadcast link, an interface whose interface MAC address is 0000.acd1.12ef on the RB A and an interface whose interface MAC address is 0000.acd1.12d3 on the RB B establish a neighbour relationship of a broadcast network. Suppose that the system-id of the RB A is 1111.1111.1111, and the system-id of the RB B is 2222.2222.2222. The interface 1 of the RB A is a DIS elected by the broadcast network, then a pseudo node RBA.1 is created.

### (1) Broadcast link protocol extension

In the above topology, the generation of the LSP is as follows.

A neighbour 1111.1111.1111.01 (RB A.01) is contained in the LSP generated by the RB A, suppose that the metric is 10, the neighbour carries a sub-TLV: MAC interface address sub-TLV, in which the local MAC interface address is 0000.acd1.12d3.

A neighbour 1111.1111.1111.01 (RB A.01) is contained in the LSP generated by the RB B, suppose that the metric is 10, the neighbour carries a sub-TLV: MAC interface address sub-TLV, in which the local MAC interface address is 0000.acd1.12ef.

In the LSP generated by the pseudo node RB A.1, like the content generated according to the existing protocol, there are two neighbours: one is 1111.1111.1111.00 (RB A.00), the metric is 0; and the other is 2222.2222.2222.00 (RB B.00), the metric is 0. There is not any sub-TLV information carried.

### (2) Broadcast link route calculation

The route calculation is illustrated by taking the unicast route calculation for example, and the multicast route calculation method is similar to the method for the unicast route calculation. How the route calculation uses, in the broadcast link network, the neighbour information and the sub-TLV carried by the neighbour information to complete the topology calculation and the PRC is mainly described.

After receiving the LSP generated by the RB A, the RB B and the RB A.01, the route calculation unit conducts the unicast route calculation, including the unicast topology calculation and the unicast PRC, for the RB A and the RB B.

The route calculation unit conducts the unicast route calculation for the RB A in the following manner. First, unicast topology calculation is conducted based on the SPF algorithm. According to the sub-TLV information, it is found that the next-hop information reaching the RB B is the outgoing interface, whose MAC address is 0000.acd1.12d3, of the RB A, and a gateway of the next hop is the MAC address 0000.acd1.12ef. The outgoing interface of the next hop is identified by acquiring its MAC address 0000.acd1.12d3 from the MAC interface address sub-TLV of the neighbour RB A.01 in the LSP of the RB A. The gateway of the next hop is acquired from the local MAC interface address sub-TLV of the neighbour RB A.01 in the LSP of the RB B, and the MAC address is 0000.acd1.12ef. Then, the next-hop information of the route corresponding to a nickname carried by the RB B is formed by copying the next-hop information of the RB B, and the route calculation ends. At last, the route calculation unit sends the routing information of the RB A to the RB A, and the RB A uses the routing table corresponding to itself to conduct route forwarding.

Similarly, the route calculation unit conducts the route calculation for the RB B in the following manner. First, unicast topology calculation is conducted based on the SPF algorithm. According to the sub-TLV information, it is found that the next-hop information reaching the RB A is the outgoing interface, whose MAC address is 0000.acd1.12ef, of the RB B, and the gateway of the next hop is the MAC address 0000.acd1.12d3. The outgoing interface of the next hop is identified by acquiring its MAC address 0000.acd1.12ef from the MAC interface address sub-TLV of the neighbour RB A.01 in the LSP of the RB B. The gateway of the next hop is acquired from the local MAC interface address sub-TLV of the neighbour RB A.01 in the LSP of the RB A, and the MAC address is 0000.acd1.12d3. Then, the next-hop information of the route corresponding to the nickname carried by the RB A is formed by copying the next-hop information of the RB A, and the route calculation ends. At last, the route calculation unit sends the routing information of the RB B to the RB B, and the RB B uses the routing table corresponding to itself to conduct route forwarding.

### 3. Point-to-point link related protocol extension and route calculation

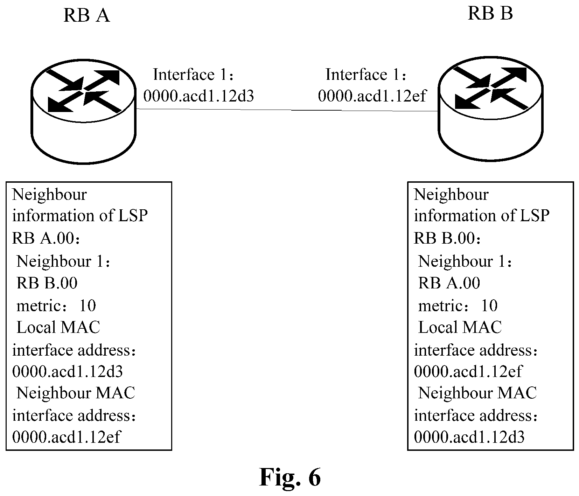

Fig. 6 is a diagram of the generated LSP for a point-to-point link according to the example 1 of the present disclosure. As shown in Fig. 6, on the point-to-point link, an interface whose interface MAC address is 0000.acd1.12d3 on the RB A and an interface whose interface MAC address is 0000.acd1.12ef on the RB B establish the point-to-point neighbour relationship. Suppose that the system-id of the RB A is 1111.1111.1111, and the system-id of the RB B is 2222.2222.2222.

### (1) Detailed description of point-to-point link protocol extension

There is a neighbour 2222.2222.2222.00 (RB A.01) in the LSP generated by the RB A, suppose that the metric is 10, the neighbour carries two sub-TLV: one is a MAC interface address sub-TLV, and the local MAC interface address is 0000.acd1.12d3; the other is a neighbour MAC address sub-TLV, and the local MAC interface address is 0000.acd1.12ef.

There is a neighbour 1111.1111.1111.01 (RB A.01) in the LSP generated by the RB B, suppose that the metric is 10, the neighbour carries two sub-TLV: one is a MAC interface address sub-TLV, and the local MAC interface address is 0000.acd1.12ef; the other is a neighbour MAC address sub-TLV, and the local MAC interface address is 0000.acd1.12d3. The last one is an interface information sub-TLV, and the interface number is filled to be 1.

### (2) Point-to-point link route calculation

The route calculation is still illustrated by taking the unicast route calculation for example, and the multicast route calculation method is similar to the method for the unicast route calculation. How the route calculation uses, in the point-to-point link network, the neighbour information and the sub-TLV carried by the neighbour information to complete the topology calculation and the PRC is mainly described.

After receiving the LSP generated by the RB A and the RB B, the route calculation unit conducts the unicast route calculation, including the unicast topology calculation and the unicast PRC, for the RB A and the RB B.

The route calculation unit conducts the unicast route calculation for the RB A in the following manner. First, unicast topology calculation is conducted based on the SPF algorithm. It is found that the next-hop information reaching the RB B is the outgoing interface, whose MAC address is 0000.acd1.12d3, of the RB A, and the gateway of the next hop is 0000.acd1.12ef. The outgoing interface of the next hop is identified by acquiring its MAC address from the MAC interface address sub-TLV of the neighbour RB B.00 in the LSP of the RB A. The gateway of the next hop is acquired from the neighbour MAC interface address sub-TLV of the neighbour RB B.00 in the LSP of the RB A, and the MAC address is 0000.acd1.12ef. However, before acquiring the MAC address of the gateway, it is necessary to confirm that in the LSP of the RB A, the neighbour MAC interface address of the neighbour RB B.00 is 0000.acd1.12ef, and in the LSP of the RB B, the local MAC interface address of the neighbour RB A.00 is 0000.acd1.12ef, that is, to confirm that the two MAC addresses are the same, which is actually confirming that the description information of the two point-to-point neighbours is on the same point-to-point link. Then, the next-hop information of the route corresponding to the nickname carried by the RB B is formed by copying the next-hop information of the RB B, and the route calculation ends. At last, the route calculation unit sends the routing information of the RB A to the RB A, and the RB A uses the routing table corresponding to itself to conduct route forwarding.

The route calculation unit conducts the unicast route calculation for the RB B in the following manner. First, unicast topology calculation is conducted based on the SPF algorithm. It is found that the next-hop information reaching the RB A is the outgoing interface, whose MAC address is 0000.acd1.12ef, of the RB B, and the gateway of the next hop is 0000.acd1.12d3. The outgoing interface of the next hop is identified by acquiring its MAC address from the MAC interface address sub-TLV of the neighbour RB B.00 in the LSP of the RB B. The gateway of the next hop is acquired from the neighbour MAC interface address sub-TLV of the neighbour RB A.00 in the LSP of the RB B, and the MAC address is 0000.acd1.12d3. However, before acquiring the MAC address of the gateway, it is necessary to confirm that in the LSP of the RB B, the neighbour MAC interface address of the neighbour RB A.00 is 0000.acd1.12d3, and in the LSP of the RB A, the neighbour MAC interface address of the neighbour RB B.00 is 0000.acd1.12d3, that is, to confirm that the two MAC addresses are the same, which is actually confirming that the description information of the two point-to-point neighbours is on the same point-to-point link. Then, the next-hop information of the route corresponding to the nickname on the RB A is formed by copying the next-hop information of the RB A, and the unicast route calculation ends. At last, the route calculation unit sends the routing information of the RB B to the RB B, and the RB A uses the routing table corresponding to itself to conduct route forwarding.

In another example, a piece of software is also provided, which is applied to implementing the technical solutions described in the above examples and examples.

In another example, a storage medium is also provided, which stores the above software, and includes, but is not limited to, a compact disc, a floppy disc, a hard disk drive, an erasable memory, and so on.

Obviously, those skilled in the art should appreciate that the above components and steps of the present disclosure can be implemented by a general-purpose computing device, and they can be centralized in a single computing device or distributed on a network composed of multiple computing devices; optionally, they can be implemented by a program code which is capable of being executed by the computing device, so that they can be stored in a storage device and executed by the computing device; in addition, under some conditions, the presented or described steps can be executed in an order different from that described here; or they are made into integrated circuit components, respectively; or multiple components and steps of them are made into a single integrated circuit component to realize. In this way, the present disclosure is not limited to any particular combination of hardware and software.

The above is only the example of the present disclosure and not intended to limit the present disclosure; for those skilled in the art, the present disclosure may have various modifications and changes.

### Industrial Applicability

As described above, a TRILL ISIS-based route calculation method and device provided by the examples of the present disclosure have the following beneficial effects: the problem that a TRILL ISIS-based route calculation manner adopted in related technologies occupies considerable calculation resources and can be easily attacked is solved, the calculation resources occupied by the TRILL ISIS-based route calculation manner are reduced, and the opportunities of attacking the TRILL ISIS are reduced since it is unnecessary in the present scheme to conduct mutual flooding and synchronization among various RB and save the LSP of other RB, thereby improving the stability and reliability of a system.

## Claims

1. A Transparent Interconnection of Lots of Links, TRILL, Intermediate System to Intermediate System, ISIS-based route calculation method, comprising:
acquiring, by a route calculation unit, a Link State Protocol Data Unit, LSP, packet from each Routing Bridge, RB, in a network (S102); and
calculating, by the route calculation unit, a routing table of each RB according to the LSP packet acquired from each RB, and sending, by the route calculation unit, the routing table to each RB for which the routing table was calculated (S104);
wherein the LSP packet comprises: a neighbour Type, Length, Value, TLV, 22 of the RB from which the LSP packet is acquired, wherein the neighbour TLV22 of the RB contains one or more neighbour items, each neighbour item containing next-hop information needed by a current neighbour;
wherein the route calculation unit is located on a part of RBs in all RBs of the network; or, the route calculation unit is located in a preset route calculation device.

2. The method as claimed in claim 1, wherein acquiring, by the route calculation unit, the LSP packet from each RB in the network comprises:
acquiring, by the route calculation unit, the LSP packet from each RB, wherein the LSP packet comprises the neighbour TLV 22 of the RB, wherein the neighbour TLV 22 of the RB contains one or more neighbour items, each neighbour item containing a Media Access Control, MAC, interface address sub-TLV of a current neighbour.

3. The method as claimed in claim 2, wherein,
the MAC interface address sub-TLV comprises type and length of the MAC interface address sub-TLV, and a MAC address of a local interface corresponding to the current neighbour.

4. The method as claimed in claim 2, wherein in a situation where the neighbour item corresponds to a point-to-point neighbour, the LSP packet further comprises a neighbour MAC address sub-TLV of the point-to-point neighbour.

5. The method as claimed in claim 4, wherein the neighbour MAC address sub-TLV comprises type and length of the neighbour MAC address sub-TLV, and a MAC address of a neighbour interface on a link corresponding to the current neighbour.

6. A Transparent Interconnection of Lots of Links, TRILL, Intermediate System to Intermediate System, ISIS-based route calculation device, located in a route calculation unit, the ISIS-based route calculation device comprising:
an acquiring component (22), which is configured to acquire a Link State Protocol Data Unit, LSP, packet from each Routing Bridge, RB, in a network; and
a calculating component (24), which is configured to calculate a routing table of each RB according to the LSP packet acquired from each RB, and send the routing table to each RB for which the routing table is calculated;
wherein the LSP packet comprises: a neighbour Type, Length, Value, TLV, 22 of the RB from which the LSP packet is acquired, wherein the neighbour TLV22 of the RB contains one or more neighbour items, each neighbour item containing next-hop information needed by a current neighbour;
wherein the Transparent Interconnection of Lots of Links, TRILL, Intermediate System to Intermediate System, ISIS-based route calculation device is configured to carry out the steps of acquiring and calculating according to a method according to any of the claims 1-5.

7. The device as claimed in claim 6, wherein the acquiring component is configured to acquire the LSP packet from each RB, wherein the LSP packet comprises the neighbour TLV 22 of the RB, wherein the neighbour TLV 22 of the RB contains one or more neighbour items, each neighbour item containing a Media Access Control, MAC, interface address sub-TLV of a current neighbour.

8. The device as claimed in claim 7, wherein in a situation where the neighbour item corresponds to a point-to-point neighbour, the LSP packet further comprises a neighbour MAC address sub-TLV of the point-to-point neighbour.

## Patentansprüche

1. Transparente Verbindung zahlreicher Verbindungen, TRILL, Zwischensystem-zu-Zwischensystem, ISIS-basiertes Routenberechnungsverfahren, umfassend:
Erfassen durch eine Routenberechnungseinheit eines Verbindungsstatusprotokoll-Dateneinheit-, LSP-, Pakets von jeder Routingbrücke, RB, in einem Netzwerk (S 102); und
Berechnen einer Routing-Tabelle jeder RB durch die Routenberechnungseinheit gemäß dem von jeder RB erfassten LSP-Paket und Senden der Routing-Tabelle durch die Routenberechnungseinheit an jede RB, für die die Routing-Tabelle berechnet wurde (S104);
wobei das LSP-Paket umfasst: einen Nachbartyp, eine Länge, einen Wert, einen TLV, 22 der RB, von dem das LSP-Paket erfasst wird, wobei der Nachbar-TLV22 der RB ein oder mehrere Nachbarelemente aufweist, wobei jedes Nachbarelement Next-Hop-Informationen enthält von einem aktuellen Nachbarn benötigt werden;
wobei sich die Routenberechnungseinheit auf einem Teil der RBn in allen RBn des Netzwerks befindet; oder die Routenberechnungseinheit sich in einer voreingestellten Routenberechnungsvorrichtung befindet.

2. Verfahren nach Anspruch 1, wobei das Erfassen des LSP-Pakets von jeder RB in dem Netzwerk durch die Routenberechnungseinheit umfasst:
Erfassen des LSP-Pakets von jeder RB durch die Routenberechnungseinheit, wobei das LSP-Paket den Nachbar-TLV 22 der RB umfasst, wobei der Nachbar-TLV 22 der RB ein oder mehrere Nachbarelemente enthält, wobei jedes Nachbarelement eine Medienzugriffssteueryng MAC-, einen Schnittstellenadressenunter-TLV eines aktuellen Nachbarn enthält.

3. Verfahren nach Anspruch 2, wobei
der MAC-Schnittstellenadressenunter-TLV den Typ und die Länge des MAC-Schnittstellenadressenunter-TLV und eine MAC-Adresse einer lokalen Schnittstelle aufweist, welche dem aktuellen Nachbarn entspricht.

4. Verfahren nach Anspruch 2, wobei in einer Situation, in der das Nachbarelement einem Punkt-zu-Punkt-Nachbarn entspricht, das LSP-Paket ferner einen Nachbar-MAC-Adressenunter-TLV des Punkt-zu-Punkt-Nachbarn umfasst.

5. Verfahren nach Anspruch 4, wobei der Nachbar-MAC-Adressenunter-TLV Typ und Länge des Nachbar-MAC-Adressenunter-TLV und eine MAC-Adresse einer Nachbarschnittstelle auf einer dem aktuellen Nachbarn entsprechenden Verbindung umfasst.

6. Transparente Verbindung zahlreicher Verbindungen, TRILL, Zwischensystem-zu-Zwischensystem, ISIS-basierte Routenberechnungsvorrichtung, das sich in einer Routenberechnungseinheit befindet, wobei die ISIS-basierte Routenberechnungsvorrichtung umfasst:
eine Erfassungskomponente (22), die so konfiguriert ist, dass sie ein LSP-Paket von jeder Routingbrücke RB in einem Netzwerk erfasst; und
eine Berechnungskomponente (24), die so konfiguriert ist, dass sie eine Routing-Tabelle jede RB gemäß dem von jeder RB erfassten LSP-Paket berechnet und die Routing-Tabelle an jede RB sendet, für die die Routing-Tabelle berechnet wird;
wobei das LSP-Paket umfasst: einen Nachbartyp, eine Länge, einen Wert, einen TLV, 22 der RB, von dem das LSP-Paket erfasst wird, wobei der Nachbar-TLV22 der RB ein oder mehrere Nachbarelemente aufweist, wobei jedes Nachbarelement Next-Hop-Informationen enthält von einem aktuellen Nachbarn benötigt werden;
wobei die transparente Verbindung zahlreicher Verbindungen, TRILL, Zwischensystemzu-Zwischensystem, ISIS-basierte Routenberechnungsvorrichtung so konfiguriert ist, dass die Schritte des Erfassens und Berechnens gemäß einem Verfahren gemäß einem der Ansprüche 1-5 ausführt.

7. Vorrichtung nach Anspruch 6, wobei die Erfassungskomponente so konfiguriert ist, dass sie das LSP-Paket von jeder RB erfasst, wobei das LSP-Paket den Nachbar-TLV 22 der RB umfasst, wobei der Nachbar-TLV 22 der RB ein oder mehrere Nachbarelemente umfasst, wobei jedes Nachbarelement eine Medienzugriffssteuerung MAC, einen Schnittstellenadressenunter-TLV eines aktuellen Nachbarn enthält.

8. Vorrichtung nach Anspruch 7, wobei in einer Situation, in der das Nachbarelement einem Punkt-zu-Punkt-Nachbarn entspricht, das LSP-Paket ferner einen Nachbar-MAC-Adressenunter-TLV des Punkt-zu-Punkt-Nachbarn umfasst.

## Revendications

1. Procédé de calcul d'itinéraire basé sur système intermédiaire à système intermédiaire, IS-IS, d'interconnexion transparente de nombreuses liaisons, TRILL, comprenant :
l'acquisition, par une unité de calcul d'itinéraire, d'un paquet d'unité de données de protocole d'état de liaison, LSP, auprès de chaque pont de routage, RB, dans un réseau (S 102) ; et
le calcul, par l'unité de calcul d'itinéraire, d'une table de routage de chaque RB selon le paquet LSP acquis auprès de chaque RB, et l'envoi, par l'unité de calcul d'itinéraire, de la table de routage à chaque RB pour lequel la table de routage a été calculée (S 104) ;
dans lequel le paquet LSP comprend : un type, longueur, valeur, TLV, 22 voisin du RB à partir duquel le paquet LSP est acquis, dans lequel le TLV22 voisin du RB contient un ou plusieurs éléments voisins, chaque élément voisin contenant des informations de saut suivant nécessaire à un voisin actuel ;
dans lequel l'unité de calcul d'itinéraire est située sur une partie des RB dans tous les RB du réseau ; ou, l'unité de calcul d'itinéraire est située dans un dispositif de calcul d'itinéraire prédéfini.

2. Procédé selon la revendication 1, dans lequel l'acquisition, par l'unité de calcul d'itinéraire, du paquet LSP auprès de chaque RB dans le réseau comprend :
l'acquisition, par l'unité de calcul d'itinéraire, du paquet LSP auprès de chaque RB, dans lequel le paquet LSP comprend le TLV 22 voisin du RB, dans lequel le TLV 22 voisin du RB contient un ou plusieurs éléments voisins, chaque élément voisin contenant un sous-TLV d'adresse d'interface de commande d'accès au support, MAC, d'un voisin actuel.

3. Procédé selon la revendication 2, dans lequel,
le sous-TLV d'adresse d'interface MAC comprend un type et une longueur du sous-TLV d'adresse d'interface MAC, et une adresse MAC d'une interface locale correspondant au voisin actuel.

4. Procédé selon la revendication 2, dans lequel dans une situation où l'élément voisin correspond à un voisin point à point, le paquet LSP comprend en outre un sous-TLV d'adresse MAC voisin du voisin point à point.

5. Procédé selon la revendication 4, dans lequel le sous-TLV d'adresse MAC voisin comprend un type et une longueur du sous-TLV d'adresse MAC voisin, et une adresse MAC d'une interface voisine sur une liaison correspondant au voisin actuel.

6. Dispositif de calcul d'itinéraire basé sur système intermédiaire à système intermédiaire, IS-IS, d'interconnexion transparente de nombreuses liaisons, TRILL, situé dans une unité de calcul d'itinéraire, le dispositif de calcul d'itinéraire basé sur IS-IS comprenant :
un composant d'acquisition (22), qui est configuré pour acquérir un paquet d'unité de données de protocole d'état de liaison, LSP, auprès de chaque pont de routage, RB, dans un réseau ; et
un composant de calcul (24), qui est configuré pour calculer une table de routage de chaque RB selon le paquet LSP acquis auprès de chaque RB, et envoyer la table de routage à chaque RB pour lequel la table de routage est calculée ;
dans lequel le paquet LSP comprend : un type, longueur, valeur, TLV, 22 voisin du RB à partir duquel le paquet LSP est acquis, dans lequel le TLV22 voisin du RB contient un ou plusieurs éléments voisins, chaque élément voisin contenant des informations de saut suivant nécessaire à un voisin actuel ;
dans lequel le dispositif de calcul d'itinéraire basé sur système intermédiaire à système intermédiaire, IS-IS, d'interconnexion transparente de nombreuses liaisons, TRILL est configuré pour exécuter les étapes d'acquisition et de calcul selon un procédé selon l'une quelconque des revendications 1 à 5.

7. Dispositif selon la revendication 6, dans lequel le composant d'acquisition est configuré pour acquérir le paquet LSP auprès de chaque RB, dans lequel le paquet LSP comprend le TLV 22 voisin du RB, dans lequel le TLV 22 voisin du RB contient un ou plusieurs éléments voisins, chaque élément voisin contenant un sous-TLV d'adresse d'interface de commande d'accès au support, MAC, d'un voisin actuel.

8. Dispositif selon la revendication 7, dans lequel dans une situation où l'élément voisin correspond à un voisin point à point, le paquet LSP comprend en outre un sous-TLV d'adresse MAC voisin du voisin point à point.
